# EUROPEAN PATENT SPECIFICATION

(11) **EP 4 441 512 B1**
(45) Date of publication and mention of the grant of the patent: **29.10.2025**
(21) Application number: 21836000.6
(22) Date of filing: 03.12.2021
(51) Int. Cl.: G01P 3/481, G01D 5/14, G01P 3/50

(54) **MAGNET-BASED DETECTION SYSTEM FOR DETECTING A MOVEMENT OF A MOVABLE OBJECT**
MAGNETBASIERTES DETEKTIONSSYSTEM ZUR DETEKTION EINER BEWEGUNG EINES BEWEGLICHEN OBJEKTS
SYSTÈME DE DÉTECTION À AIMANTS POUR DÉTECTION DE MOUVEMENT D'UN OBJET MOBILE

(43) Date of publication of application: 09.10.2024
(73) Proprietor: Fraba B.V., 6416 SG Heerlen (NL)
(72) Inventor: BEST, Tobias, 310229 Toa Payoh (SG)
(74) Representative: terpatent PartGmbB
(86) International application number: PCT/EP2021/084157
(87) International publication number: WO 2023/099008

(56) References cited:
- US-A1- 2014 062 366
- US-A1- 2015 338 245
- US-A1- 2017 322 050
- US-A1- 2018 128 662

## Description

The present invention is directed to a magnet-based detection system for detecting a movement of a movable object, comprising: an excitation unit with at least one excitation magnet for generating an excitation magnetic field, and a sensor unit with a sensor Wiegand module comprising a sensor Wiegand coil and a sensor Wiegand wire arrangement arranged at least partially within the sensor Wiegand coil, wherein the sensor Wiegand wire arrangement is configured to generate an output signal in the sensor Wiegand coil if excited by the excitation magnetic field, and an evaluation unit configured to evaluate the output signal of the sensor Wiegand module so as to determine at least one movement parameter, wherein either the excitation unit or the sensor unit is configured to be connected with the movable object so as to co-move therewith and the other is configured to be arranged immovably, so that the excitation magnetic field generated at the position of the sensor Wiegand module varies with the movement of the movable object.

Such detection systems can be referred to as a linear encoder, displacement encoder, or displacement measuring/detection system, rotary encoder, rotary angle measuring/detection system, or rotary angle sensor. The movement of the object to be detected can generally be any kind of movement, but typically it is a linear movement or a rotary movement.

Wiegand modules with a Wiegand coil and a Wiegand wire arrangement arranged at least partially within the Wiegand coil are well known in the art. The Wiegand wire arrangement comprises at least one Wiegand wire, i.e., a magnetically bistable wire which generally has a hard magnetic shell and a soft magnetic core or vice versa. Wiegand wires or Wiegand modules in the sense of the present invention can also be referred to as pulse wires or pulse wire modules, respectively. Under the influence of an external magnetic field, e.g., the excitation magnetic field generated by the excitation unit, a magnetization direction of the at least one Wiegand wire and thus of the entire Wiegand wire arrangement changes relatively abruptly, causing a relatively short voltage pulse in the Wiegand coil which radially surrounds the Wiegand wire arrangement. This effect is referred to as the Wiegand effect and is well known in the art. The voltage pulse(s) generated in the Wiegand coil are referred to as the output signal of the Wiegand module hereinafter.

It is generally known in the art that the number/frequency of the voltage pulses of the output signal can be used to determine a movement distance and/or a movement speed of the movable object. It is also known in the art that the electrical energy of the voltage pulses of the output signal can be stored in an energy storage arrangement and used for powering an evaluation unit, so that the detection system can be operated completely energy self-sufficient.

However, the electrical energy provided by the output signal of a conventional Wiegand module with a single Wiegand wire is relatively low, which strongly limits the number and complexity of components that can be powered by the electrical energy provided by the output signal of the Wiegand module. This limits the range of applications for such a detection system.

Against this background, DE 199 25 884 C2 and WO 2020/160766 A1 disclose Wiegand modules which are provided with a Wiegand wire arrangement having more than one Wiegand wire. Due to the larger number of Wiegand wires, the output signal of the disclosed Wiegand modules typically provides more electrical energy compared to that of a Wiegand module with a single Wiegand wire. However, the Wiegand wires generally do not change their magnetization direction simultaneously, but one after the other with slight delays. This causes the voltage pulse generated in the Wiegand coil to be relatively broad or to be even split into multiple voltage pulses, which makes it very difficult or even impossible to reliably determine the movement parameter based on the output signal.

An object of the present invention is therefore to provide a reliable and versatile magnet-based detection system for detecting a movement of a movable object.

This object is achieved with a magnet-based detection system with the features of claim 1.

The magnet-based detection system according to the present invention is provided with an excitation unit which comprises at least one excitation magnet for generating an excitation magnetic field and with a separate sensor unit for detecting the excitation magnetic field. Either the excitation unit or the sensor unit is configured to be connected with the movable object the movement of which is to be detected, so as to co-move therewith; the respective other is configured to be arranged immovably. As a result, the excitation magnetic field generated by the excitation unit at a defined position of the sensor unit varies with the movement of the movable object which allows the sensor unit to determine at least one movement parameter based on the detected excitation magnetic field. The excitation unit and the sensor unit are in particular designed in such a way that an alternating excitation magnetic field is generated at a defined position of the sensor unit if the movable object is moved.

The sensor unit according to the present invention is provided with two separate Wiegand modules, a power Wiegand module and a sensor Wiegand module. The power Wiegand module comprises a power Wiegand coil and a power Wiegand wire arrangement which has at least one power Wiegand wire and which is arranged at least partially within the power Wiegand coil. The power Wiegand wire arrangement is configured to generate a power output signal in the power Wiegand coil if the power Wiegand wire arrangement is excited by the excitation magnetic field. The sensor Wiegand module comprises a sensor Wiegand coil and a sensor Wiegand wire arrangement which has at least one sensor Wiegand wire and which is arranged at least partially within the sensor Wiegand coil. The sensor Wiegand wire arrangement is configured to generate a sensor output signal in the sensor Wiegand coil if the sensor Wiegand wire arrangement is excited by the excitation magnetic field.

The magnet-based detection system according to the present invention is also provided with an evaluation unit for determining at least one movement parameter. According to the present invention, the evaluation unit is supplied with electrical energy provided by the power output signal of the power Wiegand module and is configured to evaluate the sensor output signal of the sensor Wiegand module to determine the at least one movement parameter.

The magnet-based detection system according to the present invention is also provided with an energy storage arrangement which is configured to store electrical energy provided by the power output signal of the power Wiegand module. The energy storage arrangement comprises at least one energy storage device which can be a simple capacitor or any other device which allows to store electrical energy. The electrical energy stored in the energy storage arrangement is used to power the evaluation unit and/or other components of the sensor unit.

According to the present invention, the sensor Wiegand module, the output signal of which is evaluated by the evaluation unit, and the power Wiegand module, from which electrical energy of the output signal is stored in the energy storage arrangement for powering the evaluation unit and/or other components of the sensor unit, are designed differently. In particular, the sensor Wiegand wire arrangement is different from the power Wiegand wire arrangement and/or the sensor Wiegand coil is different from the power Wiegand coil. The sensor Wiegand wire arrangement and the power Wiegand wire arrangement can, for example, be provided with a different number of Wiegand wires or with Wiegand wires having different wire diameters. The sensor Wiegand coil and the power Wiegand coil can, for example, be provided with a different number of windings or with different coil diameters.

Using two separate Wiegand modules for providing electrical energy on the one hand and for providing the sensor output signal for determining the movement parameter on the other hand, allows each Wiegand module to be individually optimized for its respective application. In particular, the power Wiegand module according to the present invention can be optimized for generating a power output signal which provides a particularly high electrical energy, and the sensor Wiegand module according to the present invention can be optimized for generating a sensor output signal which allows the movement parameter to be determined reliably and accurately. The high electrical energy provided by the power Wiegand module allows, for example, to operate a relatively complex evaluation unit, additional sensor elements and/or a wireless data interface.

The sensor unit with the two different Wiegand modules according to the present invention therefore allows to realize a reliable and versatile magnet-based detection system for detecting a movement of a movable object.

Preferably, the sensor unit is provided with more than one power Wiegand module, each power Wiegand module comprising a power Wiegand coil and a power Wiegand wire arrangement arranged at least partially within the power Wiegand coil, wherein the power Wiegand wire arrangement is configured to generate a power output signal in the power Wiegand coil if excited by the excitation magnetic field. Each power Wiegand module is designed differently from the sensor Wiegand module. In particular, for each power Wiegand module, the power Wiegand wire arrangement is different from the sensor Wiegand wire arrangement and/or the power Wiegand coil is different from the sensor Wiegand coil. Generally, all power Wiegand modules can be designed differently. Preferably, all power Wiegand modules are substantially identical which allows the power Wiegand sensor to be manufactured more efficiently. The energy storage arrangement is configured to store electrical energy provided by the power output signals of all power Wiegand modules so that the total energy of the power output signals of all power Wiegand modules can be used to power the evaluation unit and/or other components of the sensor unit. Using more than one power Wiegand module allows to significantly increase the amount of electrical energy generated by the sensor unit which allows to power more or complex components. This allows to realize a particularly reliable and versatile magnet-based detection system for detecting a movement of a movable object.

Preferably, the power Wiegand modules are arranged displaced from each other with respect to a movement direction of the movable object, e.g., displaced with respect to a circumferential direction in case of a rotatable object or with respect to a linear direction in case of a linearly movable object. The power Wiegand modules are preferably equidistantly distributed along a movement distance of the movable object, e.g., equidistantly distributed along a circumference of a rotatable object or equidistantly distributed along a linear movement distance of a linearly movable object. This allows to realize a relatively efficient and relatively continuous supply of electrical energy by the power Wiegand modules during the movement of the movable object.

Preferably, for each power Wiegand module, a total power Wiegand wire volume of the power Wiegand wire arrangement, i.e., the total volume of all power Wiegand wires of the respective power Wiegand wire arrangement, is larger than a total sensor Wiegand wire volume of the sensor Wiegand wire arrangement of the sensor Wiegand module, i.e., the total volume of all sensor Wiegand wires of the sensor Wiegand wire arrangement. The power Wiegand wire arrangement can, for example, be provided with a larger number of power Wiegand wires compared to a number of sensor Wiegand wires of the sensor Wiegand wire arrangement, and/or with a power Wiegand wire having a larger diameter compared to that of the sensor Wiegand wire. Due to the relatively large total power Wiegand wire volume of the power Wiegand wire arrangement, the power Wiegand wire module can generate more electrical energy compared to the sensor Wiegand wire module. On the other hand, due to the relatively small total sensor Wiegand wire volume of the sensor Wiegand wire arrangement, the sensor Wiegand wire module can provide a sensor output signal with relatively sharp voltage pulses which can be reliably evaluated by the evaluation unit. This allows to realize a particularly reliable and versatile magnet-based detection system for detecting a movement of a movable object.

Preferably, for each power Wiegand module, a power Wiegand coil inductance of the power Wiegand coil is higher than a sensor Wiegand coil inductance of the sensor Wiegand coil of the sensor Wiegand module. The power Wiegand coil can, for example, be provided with a larger number of windings or with a larger coil diameter compared to those of the sensor Wiegand coil. Due to the relatively high power Wiegand coil inductance of the power Wiegand coil, the power Wiegand wire module can generate more electrical energy compared to the sensor Wiegand wire module. On the other hand, due to the relatively low Wiegand coil inductance of the sensor Wiegand coil, the sensor Wiegand wire module can provide a sensor output signal which can be reliably evaluated by the evaluation unit. This allows to realize a particularly reliable and versatile magnet-based detection system for detecting a movement of a movable object.

Preferably, the evaluation unit is electrically connected with the energy storage device arrangement so as to be supplied with electrical energy stored therein. This allows to power a relatively complex evaluation unit without the need of an external energy supply and thus allows to realize a particularly reliable and versatile magnet-based detection system for detecting a movement of a movable object.

Preferably, the sensor unit is provided with a wireless data interface for wireless data transmission, wherein the wireless data interface is electrically connected with the energy storage arrangement so as to be supplied with electrical energy stored therein. The wireless data interface allows data, e.g., movement parameters and/or configuration data, to be transmitted to/from the sensor unit completely wirelessly. Since the wireless data interface is supplied with electrical energy which has been provided by the power output signal of at least one power Wiegand module and has been stored in the energy storage arrangement, no external energy supply is required for operating the wireless data interface. The sensor unit can thus be installed without requiring any cable connection. This allows to realize a particularly versatile magnet-based detection system for detecting a movement of a movable object.

Preferably, the sensor unit is provided with an additional sensor element for sensing a physical property, wherein the additional sensor element is electrically connected with the energy storage arrangement so as to be supplied with electrical energy stored therein. The additional sensor element can, for example, be a temperature sensor or a pressure sensor. The additional sensor element allows to detect an additional physical property of the movable object or of the environment of the movable object. The detected additional physical property can, for example, be used to allow a more accurate determination of the at least one movement parameter by the evaluation unit. Since the additional sensor element is supplied with electrical energy which has been provided by the power output signal of at least one power Wiegand module and has been stored in the energy storage arrangement, no external energy supply is required for operating the additional sensor element. This allows to realize a particularly reliable magnet-based detection system for detecting a movement of a movable object.

Two embodiments of the present invention are described below with reference to the enclosed figures. It shows:
Figure 1 a schematic illustration of a first embodiment of a magnet-based detection system for detecting a movement of a movable object according to the present invention,
Figure 2 a schematic illustration of a sensor unit of the magnet-based detection system of figure 1,
Figure 3 a schematic illustration of an excitation unit of the magnet-based detection system of figure 1,
Figure 4 schematic cross sections of a power Wiegand module and a sensor Wiegand module of the sensor unit of figure 2, and
Figure 5 a schematic illustration of a second embodiment of a magnet-based detection system for detecting a movement of a movable object according to the present invention.

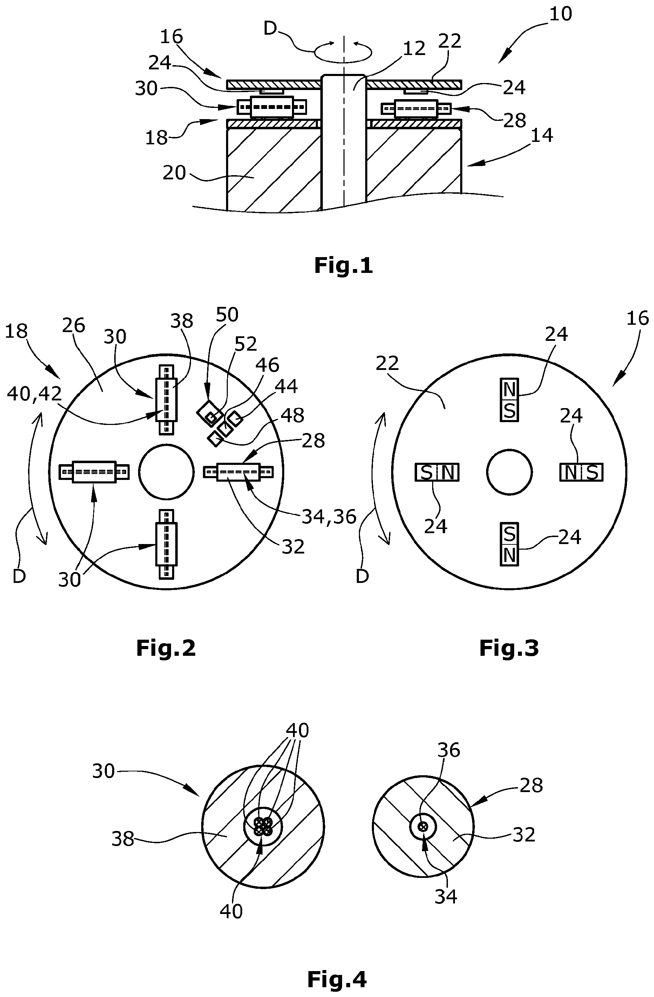

Fig. 1 shows a magnet-based detection system 10 which is configured to detect a movement of a movable object 12 along a movement direction D. Here, the movable object 12 is a rotatable shaft of an electric motor 14 and the movement direction D is the circumferential direction of the shaft.

The magnet-based detection system 10 comprises an excitation unit 16 which is attached to the movable object 12 so as to co-move therewith, and a sensor unit 18 which is attached to an immovable housing part 20 of the electric motor 14.

The excitation unit 16 comprises a disc shaped support element 22 which radially surrounds the moveable object 12 and is attached thereto. The excitation unit 16 comprises four permanent-magnetic excitation magnets 24 which are arranged on a surface of the support element 22 facing the sensor unit 18. The four excitation magnets 24 are arranged to be equidistantly distributed over the circumference of the support element 22, i.e., are equidistantly displaced from each other with respect to the movement direction D of the movable object 12. The four excitation magnets 24 are configured such that adjacent excitation magnets 24 have substantially opposite radial magnetization, i.e., have different magnetic polarities (N: magnetic north pole, S: magnetic south pole) at their radially inner side and radially outer side, respectively. The excitation magnets 24 thus generate an excitation magnetic field which varies with respect to a defined position of the sensor unit 18 as the movable object 12 moves in the movement direction D.

The sensor unit 18 comprises a disc shaped circuit board 26 which radially surrounds the moveable object 12 and is attached to the housing part 20. The sensor unit 18 comprises one sensor Wiegand module 28 and three power Wiegand modules 30 which are arranged on a surface of the circuit board 26 facing the excitation unit 16. The four Wiegand modules 28,30 are arranged to be equidistantly distributed over the circumference of the circuit board 26, i.e., are equidistantly displaced from each other with respect to the movement direction D of the movable object 12.

The sensor Wiegand module 28 comprises a sensor Wiegand coil 32 and a sensor Wiegand wire arrangement 34 with one single sensor Wiegand wire 36. The sensor Wiegand wire arrangement 34 is arranged partially within the sensor Wiegand coil 32 such that the sensor Wiegand coil 32 radially surrounds an axial midsection of the sensor Wiegand wire 36. The sensor Wiegand wire arrangement 34 is thus configured to generate a sensor output signal in the sensor Wiegand coil 32 in response to being excited by the excitation magnetic field generated by the excitation magnets 24.

Each of the three power Wiegand modules 30 comprises a power Wiegand coil 38 and a power Wiegand wire arrangement 40 with four power Wiegand wires 42. The power Wiegand wire arrangement 40 is arranged partially within the power Wiegand coil 38 such that the power Wiegand coil 38 radially surrounds an axial midsection of each of the four power Wiegand wires 42. The power Wiegand wire arrangement 40 is thus configured to generate a power output signal in the power Wiegand coil 38 in response to being excited by the excitation magnetic field generated by the excitation magnets 24.

The number of power Wiegand wires 42 is larger than the number of sensor Wiegand wires 36 so that a total power Wiegand wire volume of the power Wiegand wire arrangement 40 is larger than a total sensor Wiegand wire volume of the sensor Wiegand wire arrangement 34. Furthermore, the power Wiegand coil 38 has a coil diameter which is larger than a coil diameter of the sensor Wiegand coil 32 so that a power Wiegand coil inductance of the power Wiegand coil 38 is higher than a sensor Wiegand coil inductance of the sensor Wiegand coil 32.

The sensor unit 18 comprises an energy storage arrangement 44 which is electrically connected with each of the three power Wiegand modules 30 and which is configured to store electrical energy provided by the power output signals of the three power Wiegand modules 30.

The sensor unit 18 comprises a wireless data interface 46 which is electrically connected with the energy storage arrangement 44 so as to be supplied with electrical energy which has been provided by the power output signals of the three power Wiegand modules 30 and has been stored in the energy storage arrangement 44. The wireless data interface 46 is configured to allow wireless transmission, preferably sending and receiving, of data.

The sensor unit 18 comprises an additional sensor element 48 which is electrically connected with the energy storage arrangement 44 so as to be supplied with electrical energy which has been provided by the power output signals of the three power Wiegand modules 30 and has been stored in the energy storage arrangement 44. The additional sensor element 48 is configured to sense a physical property and to provide a respective sensor element output signal. The additional sensor element 48 can, for example, be a temperature sensor which is configured to sense a temperature and to provide a respective temperature signal.

The sensor unit 18 comprises an evaluation unit 50 which is electrically connected with the energy storage arrangement 44 so as to be supplied with electrical energy which has been provided by the power output signals of the three power Wiegand modules 30 and has been stored in the energy storage arrangement 44. The evaluation unit 50 is electrically connected with the sensor Wiegand module 28 so as to receive the sensor output signal which is generated in the sensor Wiegand coil 32 by the sensor Wiegand wire arrangement 34. The evaluation unit 50 is electrically connected with the additional sensor element 48 so as to receive the sensor element output signal which is provided by the additional sensor element 48. The evaluation unit 50 is electrically connected with the wireless data interface 46 so as to allow a transmission of data to/from the evaluation unit 50. The evaluation unit 50 comprises a data storage 52.

The evaluation unit 50 is configured to evaluate the sensor output signal of the sensor Wiegand module 28 and the sensor element output signal of the additional sensor element 48 so as to determine a physical property parameter, e.g., a current temperature, and at least one movement parameter, e.g., a current rotary angle of the movable object 12 and/or a rotation count value representing a total number of rotations of the movable object 12. The evaluation unit 50 is configured to store the determined physical property parameter and the determined at least one movement parameter in the data storage 52 and to allow transmission of the determined physical property parameter and the determined at least one movement parameter via the wireless data interface 46. The evaluation unit 50 can also be configured to store a history/progression of the physical property parameter.

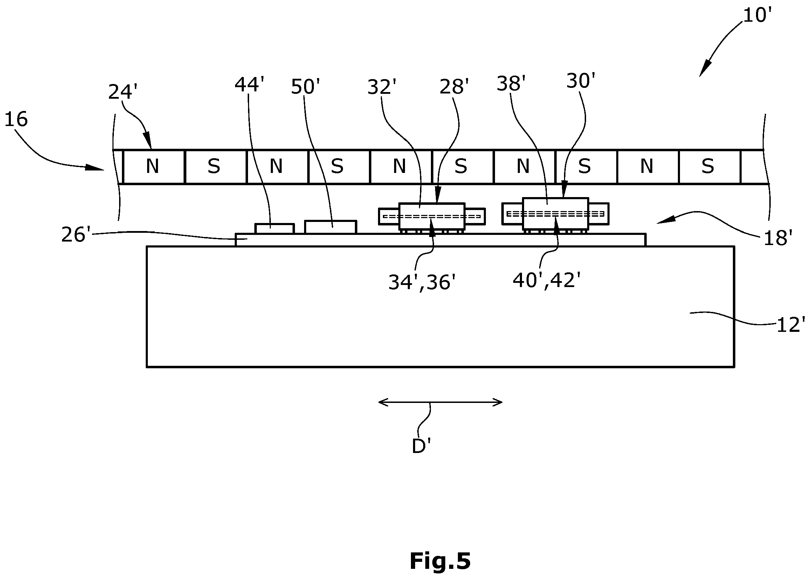

Fig. 5 shows an alternative magnet-based detection system 10' according to the present invention. Features of the magnet-based detection system 10' which are already known from the magnet-based detection system 10 are referenced with the respective reference sign of Figs. 1 to 4 but with an additional apostrophe character.

The magnet-based detection system 10' is configured to detect a movement of the movable object 12 which is linearly movable along the movement direction D'. Here, the sensor unit 18' is attached to the movable object 12' so as to co-move therewith, and the exaction unit 16' is arranged immovable.

The excitation unit 16' comprises a longitudinal excitation magnet 24' which is provided with an alternating sequence of magnetic north poles N and magnetic south poles S in the movement direction D'. The excitation magnet 24' can be a single permanently magnetized body or can comprise a plurality of permanent magnets which are arranged side by side. The excitation magnet 24' generates an excitation magnetic field which varies with respect to a defined position of the sensor unit 18' as the movable object 12' moves in the movement direction D'.

Structure and functionality of the sensor unit 18' are substantially identical to those of the sensor unit 18 of the magnet-based detection system 10, the main difference being that the sensor unit 18' comprises only one power Wiegand module 30' which is arranged adjacent to the sensor Wiegand module 28' in the movement direction D'. The sensor Wiegand module 28' and the power Wiegand module 30' themselves are again designed substantially identical to the sensor Wiegand module 28 and the power Wiegand module 30 of the sensor unit 18 of the magnet-based detection system 10.

### Reference List

- 10;10': magnet-based detection system
- 12;12': movable object
- 14: electric motor
- 16; 16': excitation unit
- 18; 18': sensor unit
- 20: housing part
- 22: support element
- 24: excitation magnets
- 26;26': circuit board
- 28;28': sensor Wiegand module
- 30;30': power Wiegand modules
- 32;32': sensor Wiegand coil
- 34;34': sensor Wiegand wire arrangement
- 36;36': sensor Wiegand wire
- 38;38': power Wiegand coil
- 40;40': power Wiegand wire arrangement
- 42;42': power Wiegand wire
- 44;44': energy storage arrangement
- 46: wireless data interface
- 48: additional sensor element
- 50;50': evaluation unit
- 52: data storage

- D;D': movement direction
- N: magnetic north pole
- S: magnetic south pole

## Claims

1. Magnet-based detection system (10;10') for detecting a movement of a movable object (12;12'), comprising:
an excitation unit (16;16') with at least one excitation magnet (24;24') for generating an excitation magnetic field, and
a sensor unit (18;18') with
- a power Wiegand module (30;30') comprising
• a power Wiegand coil (38;38') and
• a power Wiegand wire arrangement (40;40') arranged at least partially within the power Wiegand coil (38;38'),
wherein the power Wiegand wire arrangement (40;40') is configured to generate a power output signal in the power Wiegand coil (38;38') if excited by the excitation magnetic field,
- a sensor Wiegand module (28;28') comprising
• a sensor Wiegand coil (32;32') and
• a sensor Wiegand wire arrangement (34;34') arranged at least partially within the sensor Wiegand coil (32;32'),
wherein the sensor Wiegand wire arrangement (34;34') is different from the power Wiegand wire arrangement (40;40') and/or the sensor Wiegand coil (32;32') is different from the power Wiegand coil (38;38') and
wherein the sensor Wiegand wire arrangement (34;34') is configured to generate a sensor output signal in the sensor Wiegand coil (32;32') if excited by the excitation magnetic field,
- an energy storage arrangement (44;44') configured to store electrical energy provided by the power output signal of the power Wiegand module (30;30'), and
- an evaluation unit (50;50') configured to evaluate the sensor output signal of the sensor Wiegand module (28;28') so as to determine at least one movement parameter,
wherein either the excitation unit (16;16') or the sensor unit (18;18') is configured to be connected with the movable object (12;12') so as to co-move therewith and the other is configured to be arranged immovably.

2. Magnet-based detection system (10) according to claim 1, wherein the sensor unit (18) comprises a plurality of power Wiegand modules (30), each of which comprises a power Wiegand coil (38) and a power Wiegand wire arrangement (40) arranged at least partially within the power Wiegand coil (38), wherein, for each power Wiegand module (30), the power Wiegand wire arrangement (40) is different from the sensor Wiegand wire arrangement (34) and/or the power Wiegand coil (38) is different from the sensor Wiegand coil (32), and the power Wiegand wire arrangement (40) is configured to generate a power output signal in the power Wiegand coil (38) if excited by the excitation magnetic field, and wherein the energy storage arrangement (44) is configured to store electrical energy provided by the power output signals of all power Wiegand modules (30).

3. Magnet-based detection system (10) according to claim 2, wherein the power Wiegand modules (30) are arranged displaced from each other with respect to a movement direction (D) of the movable object (12).

4. Magnet-based detection system (10;10') according to one of the preceding claims, wherein for each power Wiegand module (30;30'), a total power Wiegand wire volume of the power Wiegand wire arrangement (40;40') is larger than a total sensor Wiegand wire volume of the sensor Wiegand wire arrangement (34;34') of the sensor Wiegand module (28;28').

5. Magnet-based detection system (10;10') according to one of the preceding claims, wherein for each power Wiegand module (30;30'), a power Wiegand coil inductance of the power Wiegand coil (38;38') is higher than a sensor Wiegand coil inductance of the sensor Wiegand coil (32;32') of the sensor Wiegand module (28;28').

6. Magnet-based detection system (10;10') according to one of the preceding claims, wherein the evaluation unit (50;50') is electrically connected with the energy storage arrangement (44;44') so as to be supplied with electrical energy stored therein.

7. Magnet-based detection system (10;10') according to one of the preceding claims, wherein the sensor unit (18;18') further comprises a wireless data interface (46) for wireless data transmission, the wireless data interface (46) being electrically connected with the energy storage arrangement (44;44') so as to be supplied with electrical energy stored therein.

8. Magnet-based detection system (10;10') according to one of the preceding claims, wherein the sensor unit (18;18') further comprises an additional sensor element (48) for sensing a physical property, the additional sensor element (48) being electrically connected with the energy storage arrangement (44;44') so as to be supplied with electrical energy stored therein.

## Patentansprüche

1. Magnetbasiertes Erfassungssystem (10; 10') zum Erfassen einer Bewegung eines beweglichen Objekts (12; 12'), umfassend:
eine Erregereinheit (16; 16') mit mindestens einem Erregermagneten (24; 24') zum Erzeugen eines Erregermagnetfelds, und
eine Sensoreinheit (18; 18') mit
- einem Leistungs-Wiegand-Modul (30; 30') umfassend
• eine Leistungs-Wiegand-Spule (38; 38') und
• einer Leistungs-Wieganddraht-Anordnung (40;40'), die zumindest teilweise innerhalb der Leistungs-Wiegand-Spule (38;38') angeordnet ist,
wobei die Leistungs-Wieganddraht-Anordnung (40;40') eingerichtet ist, ein Leistungs-Ausgangssignal in der Leistungs-Wiegand-Spule (38;38') zu erzeugen, wenn sie durch das Erregermagnetfeld erregt wird,
- ein Sensor-Wiegand-Modul (28; 28'), umfassend
• eine Sensor-Wiegand-Spule (32; 32') und
• eine Sensor-Wieganddraht-Anordnung (34; 34'), die zumindest teilweise innerhalb der Sensor-Wiegand-Spule (32; 32') angeordnet ist,
wobei sich die Sensor-Wieganddraht-Anordnung (34; 34') von der Leistungs-Wiegand-Drahtanordnung (40;40') unterscheidet und/oder sich die Sensor-Wiegand-Spule (32;32') von der Leistungs-Wiegand-Spule (38;38') unterscheidet und
wobei die Sensor-Wieganddraht-Anordnung (34;34') eingerichtet ist, ein Sensor-Ausgangssignal in der Sensor-Wiegand-Spule (32;32') zu erzeugen, wenn sie durch das Erregermagnetfeld angeregt wird,
- eine Energiespeicher-Anordnung (44; 44'), die eingerichtet ist, von dem Leistungs-Ausgangssignal des Leistungs-Wiegand-Moduls (30; 30') bereitgestellte elektrische Energie zu speichern, und
- eine Auswerteeinheit (50; 50'), die eingerichtet ist, das Sensor-Ausgangssignal des Sensor-Wiegand-Moduls (28; 28') auszuwerten, um mindestens einen Bewegungsparameter zu bestimmen,
wobei entweder die Erregereinheit (16; 16') oder die Sensoreinheit (18; 18') eingerichtet ist, mit dem beweglichen Objekt (12; 12') verbunden zu sein, um sich mit diesem gemeinsam zu bewegen, und die andere eingerichtet ist, unbeweglich angeordnet zu sein.

2. Magnetbasiertes Erfassungssystem (10) nach Anspruch 1, wobei die Sensoreinheit (18) eine Vielzahl von Leistungs-Wiegand-Modulen (30) umfasst, von denen jedes eine Leistungs-Wiegand-Spule (38) und eine Leistungs-Wieganddraht-Anordnung (40) umfasst, die zumindest teilweise innerhalb der Leistungs-Wiegand-Spule (38) angeordnet ist, wobei für jedes Leistungs-Wiegand-Modul (30) die Leistungs-Wieganddraht-Anordnung (40) sich von der Sensor-Wieganddraht-Anordnung (34) unterscheidet und/oder die Leistungs-Wiegand-Spule (38) sich von der Sensor-Wiegand-Spule (32) unterscheidet, und die Leistungs-Wieganddraht-Anordnung (40) eingerichtet ist, ein Leistungs-Ausgangssignal in der Leistungs-Wiegand-Spule (38) zu erzeugen, wenn sie durch das Erregermagnetfeld erregt wird, und wobei die Energiespeicher-Anordnung (44) eingerichtet ist, elektrische Energie zu speichern, die durch die Leistungs-Ausgangssignale aller Leistungs-Wiegand-Module (30) bereitgestellt wird.

3. Magnetbasiertes Erfassungssystem (10) nach Anspruch 2, wobei die Leistungs-Wiegand-Module (30) in Bezug auf eine Bewegungsrichtung (D) des beweglichen Objekts (12) versetzt zueinander angeordnet sind.

4. Magnetbasiertes Erfassungssystem (10; 10') nach einem der vorhergehenden Ansprüche, wobei für jedes Leistungs-Wiegand-Modul (30; 30') ein Gesamt-Leistungs-Wieganddraht-Volumen der Leistungs-Wieganddraht-Anordnung (40; 40') größer ist als ein Gesamt-Sensor-Wieganddraht-Volumen der Sensor-Wieganddraht-Anordnung (34; 34') des Sensor-Wiegandmoduls (28; 28').

5. Magnetbasiertes Erfassungssystem (10; 10') nach einem der vorhergehenden Ansprüche, wobei für jedes Leistungs-Wiegand-Modul (30; 30') die Induktivität der Leistungs-Wiegand-Spule (38; 38') höher ist als die Induktivität der Sensor-Wiegand-Spule (32; 32') des Sensor-Wiegand-Moduls (28; 28').

6. Magnetbasiertes Erfassungssystem (10; 10') nach einem der vorhergehenden Ansprüche, wobei die Auswerteeinheit (50; 50') elektrisch mit der Energiespeicher-Anordnung (44; 44') verbunden ist, um mit der darin gespeicherten elektrischen Energie versorgt zu werden.

7. Magnetbasiertes Erfassungssystem (10; 10') nach einem der vorhergehenden Ansprüche, wobei die Sensoreinheit (18; 18') ferner eine Funkdatenschnittstelle (46) zur kabellosen Datenübertragung umfasst, wobei die Funkdatenschnittstelle (46) elektrisch mit der Energiespeicher-Anordnung (44; 44') verbunden ist, um mit der darin gespeicherten elektrischen Energie versorgt zu werden.

8. Magnetbasiertes Erfassungssystem (10; 10') nach einem der vorhergehenden Ansprüche, wobei die Sensoreinheit (18; 18') ferner ein zusätzliches Sensorelement (48) zum Erfassen einer physikalischen Eigenschaft umfasst, wobei das zusätzliche Sensorelement (48) elektrisch mit der Energiespeicher-Anordnung (44; 44') verbunden ist, um mit darin gespeicherter elektrischer Energie versorgt zu werden.

## Revendications

1. Système de détection à base d'aimants (10 ; 10') pour détecter un mouvement d'un objet mobile (12 ; 12'), comprenant :
une unité d'excitation (16 ; 16') avec au moins un aimant d'excitation (24 ; 24') pour générer un champ magnétique d'excitation, et
une unité de capteur (18 ; 18') avec
- un module de Wiegand de puissance (30 ; 30') comprenant
• une bobine de Wiegand de puissance (38 ; 38') et
• un agencement de fil de Wiegand de puissance (40 ; 40') agencé au moins partiellement à l'intérieur de la bobine de Wiegand de puissance (38 ; 38'),
dans lequel l'agencement de fil de Wiegand de puissance (40 ; 40') est configuré pour générer un signal de sortie de puissance dans la bobine de Wiegand de puissance (38 ; 38') s'il est excité par le champ magnétique d'excitation,
- un module de Wiegand de capteur (28 ; 28') comprenant
• une bobine de Wiegand de capteur (32 ; 32') et
• un agencement de fil de Wiegand de capteur (34 ; 34') agencé au moins partiellement à l'intérieur de la bobine de Wiegand de capteur (32 ; 32'),
dans lequel l'agencement de fil de Wiegand de capteur (34 ; 34') est différent de l'agencement de fil de Wiegand de puissance (40 ; 40') et/ou la bobine de Wiegand de capteur (32 ; 32') est différente de la bobine de Wiegand de puissance (38 ; 38') et
dans lequel l'agencement de fil de Wiegand de capteur (34 ; 34') est configuré pour générer un signal de sortie de capteur dans la bobine de Wiegand de capteur (32 ; 32') s'il est excité par le champ magnétique d'excitation,
- un agencement de stockage d'énergie (44 ; 44') configuré pour stocker de l'énergie électrique fournie par le signal de sortie de puissance du module de Wiegand de puissance (30 ; 30'), et
- une unité d'évaluation (50 ; 50') configurée pour évaluer le signal de sortie de capteur du module de Wiegand de capteur (28 ; 28') de manière à déterminer au moins un paramètre de mouvement, dans lequel soit l'unité d'excitation (16 ; 16') soit l'unité de capteur (18 ; 18') est configurée pour être reliée à l'objet mobile (12 ; 12') de manière à se déplacer conjointement avec celui-ci et l'autre est configurée pour être agencée de manière immobile.

2. Système de détection à base d'aimants (10) selon la revendication 1, dans lequel l'unité de capteur (18) comprend une pluralité de modules de Wiegand de puissance (30), dont chacun comprend une bobine de Wiegand de puissance (38) et un agencement de fil de Wiegand de puissance (40) agencé au moins partiellement à l'intérieur de la bobine de Wiegand de puissance (38), dans lequel, pour chaque module de Wiegand de puissance (30), l'agencement de fil de Wiegand de puissance (40) est différent de l'agencement de fil de Wiegand de capteur (34) et/ou la bobine de Wiegand de puissance (38) est différente de la bobine de Wiegand de capteur (32), et l'agencement de fil de Wiegand de puissance (40) est configuré pour générer un signal de sortie de puissance dans la bobine de Wiegand de puissance (38) s'il est excité par le champ magnétique d'excitation, et dans lequel l'agencement de stockage d'énergie (44) est configuré pour stocker de l'énergie électrique fournie par les signaux de sortie de puissance de tous les modules de Wiegand de puissance (30).

3. Système de détection à base d'aimants (10) selon la revendication 2, dans lequel les modules de Wiegand de puissance (30) sont agencés de manière décalée les uns par rapport aux autres par rapport à une direction de mouvement (D) de l'objet mobile (12).

4. Système de détection à base d'aimants (10 ; 10') selon l'une des revendications précédentes, dans lequel, pour chaque module de Wiegand de puissance (30 ; 30'), un volume de fil de Wiegand de puissance total de l'agencement de fil de Wiegand de puissance (40 ; 40') est supérieur à un volume de fil de Wiegand de capteur total de l'agencement de fil de Wiegand de capteur (34 ; 34') du module de Wiegand de capteur (28 ; 28').

5. Système de détection à base d'aimants (10 ; 10') selon l'une des revendications précédentes, dans lequel, pour chaque module de Wiegand de puissance (30 ; 30'), une inductance de bobine de Wiegand de puissance de la bobine de Wiegand de puissance (38 ; 38') est supérieure à une inductance de bobine de Wiegand de capteur de la bobine de Wiegand de capteur (32 ; 32') du module de Wiegand de capteur (28 ; 28').

6. Système de détection à base d'aimants (10 ; 10') selon l'une des revendications précédentes, dans lequel l'unité d'évaluation (50 ; 50') est connectée électriquement à l'agencement de stockage d'énergie (44 ; 44') de manière à être alimentée en énergie électrique stockée dans celui-ci.

7. Système de détection à base d'aimants (10 ; 10') selon l'une des revendications précédentes, dans lequel l'unité de capteur (18 ; 18') comprend en outre une interface de données sans fil (46) pour une transmission de données sans fil, l'interface de données sans fil (46) étant connectée électriquement à l'agencement de stockage d'énergie (44 ; 44') de manière à être alimentée en énergie électrique stockée dans celui-ci.

8. Système de détection à base d'aimants (10 ; 10') selon l'une des revendications précédentes, dans lequel l'unité de capteur (18 ; 18') comprend en outre un élément de capteur supplémentaire (48) pour détecter une propriété physique, l'élément de capteur supplémentaire (48) étant connecté électriquement à l'agencement de stockage d'énergie (44 ; 44') de manière à être alimenté en énergie électrique stockée dans celui-ci.
